# EUROPÄISCHE PATENTSCHRIFT

(11) **EP 1 626 231 B1**
(45) Veröffentlichungstag und Bekanntmachung des Hinweises auf die Patenterteilung: **16.04.2014**
(21) Anmeldenummer: 05291720.0
(22) Anmeldetag: 12.08.2005
(51) Int. Cl.: F24H 3/04, F24H 9/18, B60H 1/22

(54) **Heizungsanordnung mit elektrischen Heizelementen, insbesondere für ein Kraftfahrzeug**
Heating device with electric heating element, in particular for a vehicle
Dispositif de chauffage avec éléments de chauffage électriques, en particulier pour un véhicule

(30) Priorität: 13.08.2004 EP 04292053
(43) Veröffentlichungstag der Anmeldung: 15.02.2006
(73) Patentinhaber: Behr France S.A.R.L., 68250 Rouffach (FR)
(72) Erfinder: Brun, Michel, 68740 Rustenhart (FR); Eckerlen, Gerard, 68250 Rouffach (FR); Gogmos, Erwan, 56600 Lanester (FR); Miss, Pascal, 67600 Sélestat (FR); Mougey, Mathieu, 68190 Ensisheim (FR); Robin, Nicolas, 67000 Strasbourg (FR)
(74) Vertreter: Grauel, Andreas

(56) Entgegenhaltungen:
- EP-A- 0 538 131
- EP-A- 1 432 287
- DE-A- 10 025 713
- DE-A- 10 050 429
- DE-U- 9 407 104
- US-A- 6 124 570

## Beschreibung

Die Erfindung betrifft eine Heizungsanordnung mit elektrischen Heizelementen, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung Im Fußbereich angeordnet ist. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

Die elektrischen Zuheizer werden insbesondere auch für eine Kompensation der mangelnden Heizleistung resultierend aus der niedrigen Abwärme moderner Fahrzeugmotoren oder zur Komfortsteigerung für eine schnelle Innenraumaufheizung eingesetzt. Diese elektrischen Zuheizer, beispielsweise PTC-Zuheizer, werden bei laufendem Motor durch das Bordnetz versorgt. Für einen motorunabhängigen Betrieb werden diese PTC-Zuheizer aufgrund der hohen Leistungsaufnahme nicht eingesetzt. Zudem sind die herkömmlichen PTC-Zuheizer nur für den Betrieb mit einem Spannungspotential ausgelegt, siehe zum Beispiel EP 0 538 131 A.

Für die Fahrzeugvorwärmung sind zusätzliche Geräte erhältlich, die nachträglich im Fahrzeuginnenraum angebracht werden und über eine Spannung aus dem öffentlichen Energieversorgungsnetz betrieben werden. Bei diesen nachträglich eingebauten Zusatzgeräten werden vorhandene Komponenten der Fahrzeugklimaanlage nicht genutzt.

In der nicht vorveröffentlichten deutschen Patentanmeldung mit dem Aktenzeichen DE 103 55 396.7 ist eine Kraftfahrzeug-Klimaanlage mit Standheizung beschrieben, die im Falle eines Kraftfahrzeug-Motor-Stillstands durch eine externe zweite Energieversorgung, insbesondere zur Energieversorgung von PTC-Heizelementen, mit Energie versorgt wird, wobei eine Vorrichtung zum Umschalten zwischen einer ersten Energieversorgung, die beispielsweise von einem Kraftfahrzeugmotor erzeugte Energie über ein Bordnetz zur Verfügung stellt, oder der externen zweiten Energieversorgung vorgesehen ist.

In der DE 100 25 713 A1 ist ein Heizsystem, insbesondere für Kraftfahrzeuge beschrieben, mit mindestens einem mittels einer ersten Energiequelle betriebenen ersten Heizgerät und mindestens einem mittels einer zweiten Energiequelle betriebenen zweiten Heizgeräts. Als Heizgeräte sind unter anderem PTC-Elemente aufgeführt die beispielsweise über eine Batterie oder einen Netzanschluss betrieben werden.

Es ist Aufgabe der Erfindung, eine verbesserte Heizungsanordnung mit elektrischen Heizelementen, insbesondere PTC-Elementen zur Verfügung zu stellen, die über verschieden Spannungsquellen betreibbar sind, ohne einen aufwändigen Umschaltmechanismus vorzusehen und in kompakter Form angeordnet sind.

Diese Aufgabe wird gelöst durch eine Heizungsanordnung mit elektrischen Heizelementen, insbesondere PTC-Elementen mit den Merkmalen des Anspruchs 1. Vorteilhafte Ausgestaltungen sind Gegenstand der Unteransprüche.

Erfindungsgemäß ist eine Heizungsanordnung, insbesondere für ein Kraftfahrzeug, mit zumindest zwei Baugruppen ausgebildet, wobei eine Baugruppe zumindest einen Heizstrang umfasst, mit zumindest einem elektrischen Heizelement, insbesondere PTC-Element, Kontaktelementen und zumindest einem Element zur Wärmeübertragung und wobei zumindest eine erste Baugruppe von einer Niederspannungsquelle und zumindest eine zweite Baugruppe von einer Hochspannungsquelle versorgt wird. Vorteilhafterweise weist ein Heizstrang eine Mehrzahl von Heizelementen auf, wobei ein Heizelement zwischen zwei Kontaktelementen angeordnet ist. Bevorzugt sind die Kontaktelemente in Form von Kontaktblechen und die Elemente zur Wärmeübertragung als Wellrippen oder als Bleche, die im Wesentlichen senkrecht zur Längsrichtung der Heizelemente angeordnet sind, ausgebildet.

Vorteilhafterweise wird als Niederspannungsquelle für die Niederspannungsbaugruppen die Kraftfahrzeugbordnetzspannung eingesetzt und für die Versorgung der Hochspannungsbaugruppen die Netzspannung, beispielsweise eines öffentlichen Versorgungsnetzes. Die Bordnetzspannung liegt üblicherweise bei Werten zwischen 12 ± 2 V und 14 ± 2V. Sie kann aber auch bei höheren Spannungen wie beispielsweise 24 ± 2 V, 42 ± 2 V oder 48 ± 2V liegen. Die Netzspannung, die zur Versorgung der Hochspannungsbaugruppen dient ist abhängig vom Betreiberland und beträgt beispielsweise 110 ± 10 V oder 230 ± 20 V. Denkbar ist es aber auch, dass als Hochspannung keine Netzspannung eines öffentlichen Versorgungsnetzes, sondern eine erhöhte Bordnetzspannung verwendet wird, wie beispielsweise 24 ± 2 V, 42 ± 2 V oder 48 ± 2V. Eine Umschaltung zwischen unterschiedlichen Netzspannungen verschiedener Länder und/oder erhöhten Bordnetzspannungen kann beispielsweise mittels einer Umschaltvorrichtung am Fahrzeug oder mittels entsprechender Adapter vorgenommen werden. Im normalen Fahrbetrieb wird die Heizanordnung üblicherweise über das Bordnetz versorgt. Für den Fall des Fahrzeugsstillstands wird die Heizungsanordnung durch Anschluss an eine Steckdose, beispielsweise an Rastplätzen, mit Strom versorgt. Vorteilhafterweise wird mittels der Netzspannung auch ein Gebläse zur Förderung der Luft angetrieben. Insbesondere bei tiefen Temperaturen, kann das Fahrzeug vor Inbetriebnahme durch Anschließen an eine Steckdose vorgeheizt werden.

Besonders bevorzugt sind zumindest zwei Baugruppen zu einer Baueinheit zusammengefasst oder miteinander verbunden und/oder von einem Halteelement oder Rahmen gehalten beziehungsweise mittels eines solchen fixiert. Insbesondere werden Niederspannungs- und Hochspannungsbaugruppen von voneinander getrennten Halteelementen oder Rahmen gehalten und/oder sind in diese eingelegt. Vorzugsweise sind Halteelemente oder Rahmen, beispielsweise über ein Verbindungselement miteinander verbunden. Als Verbindungselement ist insbesondere ein Zwischenrahmen vorteilhaft einsetzbar. Die Niederspannungsbaugruppen und Hochspannungsbaugruppen sind durch die Fixierung mittels der Halteelemente oder Rahmen und/oder des Verbindungselements oder des Zwischenrahmens elektrisch voneinander isoliert ausgebildet.

Halteelemente oder Rahmen und/oder das Verbindungselement oder der Zwischenrahmen sind insbesondere als spritzgegossene Kunststoff-Teile ausgeführt.

In einer weiteren vorteilhaften erfindungsgemäßen Ausgestaltung der Heizungsanordnung sind zumindest zwei Niederspannungsbaugruppen und/oder zumindest zwei Hochspannungsbaugruppen spiegelbildlich angeordnet und/oder im Wesentlichen gleich aufgebaut.

Da sowohl Niederspannungs- als auch Hochspannungsbaugruppen, die für verschiedene Heizungsanordnungen bevorzugt identisch oder zumindest mit gleichen Unterbaugruppen ausgebildet sind, in einer großen Stückzahl hergestellt werden können, können die Herstellungskosten gesenkt und die Logistik vereinfacht werden. Da eine Vielzahl gleicher Teile verwendet wird, die gegebenenfalls unterschiedlich zusammengesetzt werden, lassen sich zudem Varianten optimieren, d.h. die Position der PTC-Elemente kann an die Erfordernisse, d.h. an den Verlauf der Luftströmung, optimal angepasst werden.

Der Rahmen zur Aufnahme der Baugruppen weist vorzugsweise eine als Trennwand dienende Querstrebe auf, welche zwei benachbarte Baugruppen voneinander räumlich und/oder thermisch und/oder elektrisch trennt. Die Querstrebe ist bevorzugt in einer Symmetrieebene des Rahmens angeordnet. Insbesondere im Falle einer mehrzonigen Klimaanlage ist zur Trennung der Luftströme bevorzugt senkrecht zu einer ersten, parallel zu den Baugruppen verlaufenden Querstrebe eine zweite Querstrebe vorgesehen. Entsprechend weist auch insbesondere der Zwischenrahmen eine als Trennung dienende Querstrebe auf, welche im Wesentlichen fluchtend zu einer Querstrebe eines Rahmens angeordnet ist.

Der Rahmen zur Aufnahme der Baugruppen ist bevorzugt aus mindestens zwei Rahmenelementen ausgebildet. Dabei sind die einzelnen Rahmenelemente bevorzugt mittels Clipsverbindungen miteinander verbunden, wodurch eine sehr einfache und schnelle Montage ohne Werkzeug möglich ist.

Jede Baugruppe weist vorzugsweise mindestens zwei Kontaktbleche auf, an welchen seitlich ein Element zur elektrischen Kontaktierung angebracht ist. Dabei sind die Kontaktbleche, die mit den Elementen zur Kontaktierung verbunden sind, gleich ausgebildet wie die anderen Kontaktbleche der Baugruppe. An den Elementen zur Kontaktierung sind bevorzugt Federzungen zur Verbesserung der elektrischen Kontaktierung vorgesehen. Diese können für Nieder- und Hochspannungsbaugruppen, angepasst an die unterschiedlichen Ströme verschieden ausgebildet sein.

Die Baugruppe weist vorzugsweise mindestens zwei Wellrippen auf, welche auf der Außenseite zweier Kontaktbleche zwischen denen ein PTC-Element vorgesehen ist, angeordnet sind. Die Baugruppe kann um eine, zwei oder gegebenenfalls mehr Wellrippen erweitert werden, wobei bevorzugt zwischen zwei Wellrippen ein Kontaktblech vorgesehen ist Dies ermöglicht bei identischem Aufbau des Kernbereichs eine relativ variable Gestaltung der Breite der Baugruppe. Die Heizungsanordnung kann sowohl gemeinsam geregelte als auch, insbesondere im Falle von mehrzonigen Klimaanlagen, unabhängig voneinander geregelte Heizstränge oder Baugruppen umfassen.

Die elektrische Kontaktierung der Kontaktelemente erfolgt bevorzugt mit Hilfe einer seitlich am Rahmen vorgesehenen Abdeckung, welche einen Teil des Rahmens bildet. Diese ist vorzugsweise auch mittels Clipsverbindungen befestigt. Auf der Außenseite der Abdeckung sind vorzugsweise Stecker vorgesehen.

Die elektrische Ansteuerung der Nieder- und/oder Hochspannungsbaugruppen beziehungsweise der Heizstränge kann über einen elektronischen Regler der integriert an der Heizungsanordnung, insbesondere innerhalb einer Abdeckung angeordnet ist, erfolgen. Möglich ist es auch, dass zumindest eine der Baugruppen auch von außen beispielsweise über eine Relaisschaltung angesteuert wird.

Möglich ist es, dass bei der vorgeschlagenen Heizungsanordnung zumindest eine als Hochspannungsbaugruppe ausgebildete Baugruppe und zumindest eine als Niederspannungsbaugruppe ausgebildete Baugruppe in einer Ebene angeordnet sind. Durch eine derartige Ausbildung kann insbesondere Bauraum in der Tiefe eingespart werden. Auch können bei einer derartigen Ausbildung beispielsweise beim Betrieb der Hochspannungsbaugruppe(n) die Wellrippen der Niederspannungsbaugruppe(n) mit zur Wärmeübertragung an die hindurchstreichende Luft verwendet werden, so dass eine besonders gute Wärmeübertragungsleistung und/oder ein besonders geringes Bauraumerfordernis der gesamten Heizungsanordnung realisiert werden kann.

Weiterhin ist es möglich, dass zumindest eine als Niederspannungsbaugruppe ausgebildete Baugruppe und/oder zumindest eine als Hochspannungsbaugruppe ausgebildete Baugruppe jeweils genau eine Lage und/oder genau zwei Lagen von Heizelementen aufweist. Als "Lage" ist dabei insbesondere eine jeweils zwischen einem Paar von Kontaktelementen nebeneinander angeordnete Mehrzahl von Heizelementen, wie insbesondere so genannten PTC-Steinen zu verstehen. Durch einen derartigen Aufbau ist eine besonders effektive Ansteuerung und Wärmeübertragungsleistung der Gesamtanordnung erzielbar.

Es kann vorgesehen werden, dass zumindest eine als Niederspannungsbaugruppe ausgebildete Baugruppe und/oder zumindest eine als Hochspannungsbaugruppe ausgebildete Baugruppe jeweils genau ein Stromzuführendes Kontaktelement aufweist. Dieses Kontaktelement kann insbesondere zwei Lagen von Heizelementen mit elektrischem Strom versorgen. Dazu kann das Kontaktelement mit einer Hochspannungsquelle und/oder eine Niederspannungsquelle verbunden sein.

Weiterhin ist es denkbar, dass zumindest zwei Baugruppen, insbesondere zumindest eine als Niederspannungsbaugruppe ausgebildete Baugruppe und zumindest eine als Hochspannungsbaugruppe ausgebildete Baugruppe zumindest ein gemeinsames Stromableitendes Kontaktelement aufweisen. Eine derartige beispielsweise gemeinsame Masseleitung kann einen besonders einfachen Aufbau der Heizungsanordnung fördern, da beispielsweise an sich überflüssige Isolationsmaßnahmen vermieden werden können.

Ein besonders zu bevorzugender Aufbau ergibt sich, wenn zumindest in Teilbereichen der Heizungsanordnung als Niederspannungsbaugruppen ausgebildete Baugruppen und als Hochspannungsbaugruppen ausgebildete Baugruppen jeweils aufeinander abfolgen. Dadurch kann ein besonders effektiver Aufbau zur Verfügung gestellt werden.

Weiterhin ist es auch möglich, dass zumindest eine als Niederspannungsbaugruppe ausgebildete Baugruppe und/oder zumindest eine als Hochspannungsbaugruppe ausgebildete Baugruppe in unterschiedlichen Ebenen angeordnet sind. Die durch die Gesamtanordnung hindurchgehende Luft streicht also in aller Regel nacheinander durch die entsprechenden Baugruppen hindurch. Ein derartiger Aufbau kann insbesondere die erforderliche Stirnfläche der Heizungsanordnung vermindern helfen.

Im Folgenden wird die Erfindung anhand von zwei Ausführungsbeispielen unter Bezugnahme auf die Zeichnung im Einzelnen erläutert. In der Zeichnung zeigen:
- Fig. 1: eine perspektivische Ansicht zweier Niederspannungsbaugruppen eines Teils einer Heizungsanordnung,
- Fig. 2: eine perspektivische Ansicht der Niederspannungsbaugruppen in einem teilmontierten Zustand in einem Rahmen,
- Fig. 3: eine perspektivische Ansicht zweier Hochspannungsbaugruppen eines Teils einer Heizungsanordnung,
- Fig.4: eine perspektivische Ansicht der Hochspannungsbaugruppen in einem teilmontierten Zustand in einem Rahmen,
- Fig. 5: eine perspektivische Ansicht einer erfindungsgemäßen Heizanordnung mit Nieder- und Hochspannungsbaugruppen und einem Zwischenrahmen im teilmontierten Zustand,
- Fig. 6: eine perspektivische Ansicht der Anordnung nach Fig. 5 im zusammengebauten Zustand,
- Fig. 7: eine perspektivische Ansicht der Heizungsanordnung gemäß Fig. 6 mit elektronischer Regel- und Steuereinheit,
- Fig. 8: eine Schaltungsmöglichkeit einer Heizungsanordnung in Draufsicht.

Eine PTC-Heizungsanordnung 1, die als Zuheizer in einer zweizonigen Kraftfahrzeug-Klimaanlage in Luftströmungsrichtung gesehen nach einem herkömmlichen Heizer angeordnet ist, ist in einem Ausführungsbeispiel der Erfindung durch zwei Baugruppen 11 und 12 die mit einer Bordnetzspannung versorgt werden und zwei Baugruppen 13 und 14, die mit einer Netzspannung versorgt werden, gebildet.

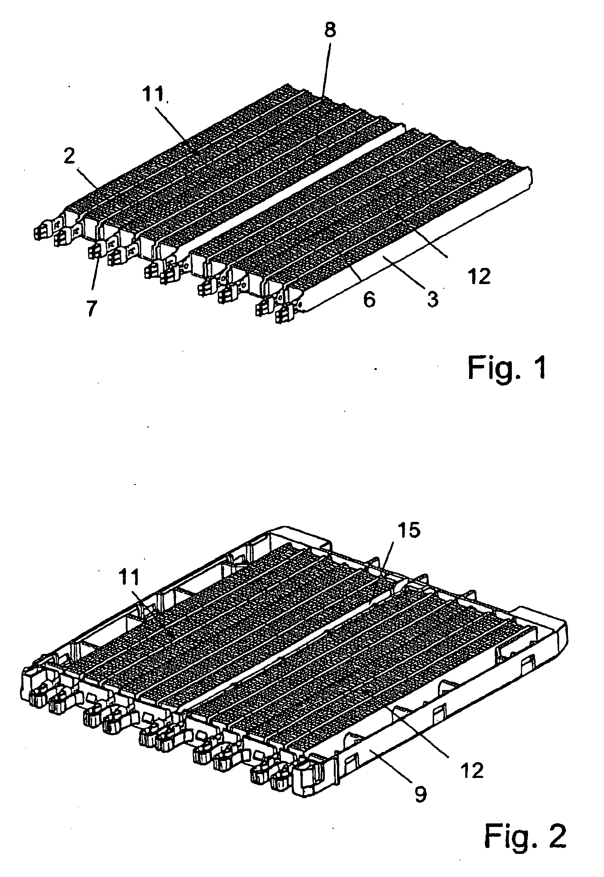

Die in Fig. 1 dargestellten Baugruppen 11 und 12 bestehen aus einer Mehrzahl von Keramik-PTC-Elementen 2, Kontaktblechen 3 und Wellrippen 6. Ein Keramik-PTC-Element 2 ist zwischen zwei parallel zueinander angeordneten Kontaktblechen 3 eingeklebt, vorliegend mittels eines elektrisch leitenden Klebstoffes (nicht dargestellt). Ebenso kann beispielsweise auch eine Lot-Verbindung vorgesehen sein. Auf den jeweils dem PTC-Element 2 gegenüberliegenden Seiten der Kontaktbleche 3 sind mittels einer entsprechenden Klebe-Verbindung Wellrippen 6 angebracht, die wiederum auf der dem PTC-Element 2 abgewandten Seite mit einem weiteren Kontaktblech 3 entsprechend verbunden sind. Die dargestellten Baugruppen 11 und 12 sind im Wesentlichen spiegelbildlich ausgebildet.

Vorliegend sind, wie in Fig. 1 dargestellt, für jede Baugruppe 11 und 12, vier PTC-Elemente 2 vorgesehen, die jeweils zwischen zwei Kontaktblechen 3 angeordnet sind, welche wiederum von Wellrippen 6 getrennt sind, wobei teilweise auch zwischen zwei Wellrippen 6 nur ein Kontaktblech 3 ohne PTC-Element 2 vorgesehen ist. Verschiedene Kontaktbleche 3 sind auf einer Seite durch Anbringung eines Elements zur Kontaktierung 7 verlängert ausgebildet, so dass sie der elektrischen Kontaktierung dienen. Dabei sind zwischen je zwei verlängert ausgebildeten Kontaktblechen 3 jeweils genau ein PTC-Element 2 vorgesehen. Ferner sind ein oder zwei Wellrippen 6 und ein oder zwei nicht verlängert ausgebildete Kontaktbleche 3 zwischen je zwei verlängert ausgebildeten Kontaktblechen 3 vorgesehen. Zwischen zwei benachbarten, verlängert ausgebildeten Kontaktblechen 3 der Baugruppen 11 und 12 liegt eine Spannung von 13 V an, die Spannung kann jedoch auch größer sein, beispielsweise 24 V, 42 V oder 48 V. Die in Fig. 1 dargestellten Baugruppen bilden die Niederspannungsbaugruppen einer der Erfindung folgenden Heizanordnung, die über die Bordnetzspannung versorgt werden.

Jede der Baugruppen 11 und 12 bildet, auf Grund der gemeinsamen elektrischen Kontaktierung der einzelnen PTC-Elemente jeder Baugruppe ein voneinander unabhängig geregeltes Heizteil. Natürlich ist, insbesondere für eine einzonige Klimaanlage, auch eine einfache, gemeinsame Regelung der beiden Baugruppen 11 und 12 möglich.

Um die zuvor beschriebene Anordnung der Niederspannungsbaugruppen 11 und 12 ist gemäß Fig. 2 ein zweiteiliger Kunststoff-Rahmen 9, vorliegend aus Polyamid, angeordnet, wobei die beiden Rahmenelemente mittels Clipsverbindungen miteinander verbunden sind. Für die Montage werden die beiden Baugruppen 11 und 12 in dieses Rahmenelement eingelegt, wobei sie beabstandet voneinander angeordnet sind. Der Rahmen 9 weist eine als Trennwand dienende Querstrebe 15 auf, welche zwei benachbarte Baugruppen voneinander räumlich, thermisch und/oder elektrisch voneinander trennt. Die Querstrebe 15 ist bevorzugt in einer Symmetrieebene des Rahmens angeordnet.

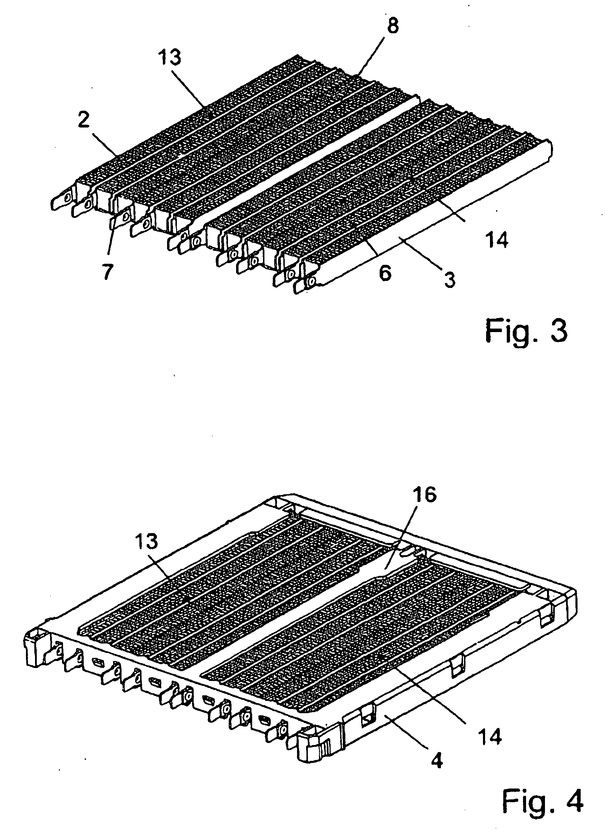

Entsprechend den Figuren 1 und 2 ist in den Figuren 3 und 4 ein Teil einer erfindungsgemäßen Heizungsanordnung 1 mit den Baugruppen 13 und 14 dargestellt, die über die Netzspannung, beispielswelse 230 V versorgt werden und demnach die Hochspannungsbaugruppen der Heizungsanordnung 1 bilden. Der Aufbau der einzelnen Baugruppen 13 und 14 ist im Wesentlichen identisch mit dem der in Fig. 1 und 2 erläuterten Baugruppen 11 und 12. Jedoch sind die PTC-Elemente 2 der Baugruppen 13 und 14, angepasst an die Netzspannung ausgelegt und somit vorteilhafterweise unterschiedlich zu den PTC-Elementen 2 der Niederspannungsbaugruppen 11 und 12 ausgebildet. Fig. 4 zeigt analog zu Fig. 2 die Anordnung der Hochspannungsbaugruppen 13 und 14 in einem Rahmen 4, der im Wesentlichen gleich wie der Rahmen 9 für die Niederspannungsbaugruppen ausgeführt ist.

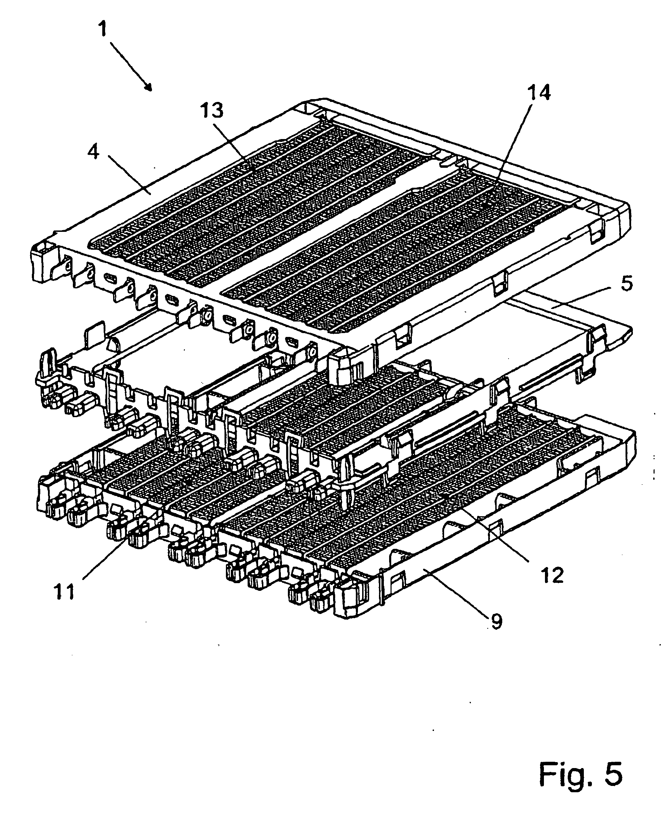

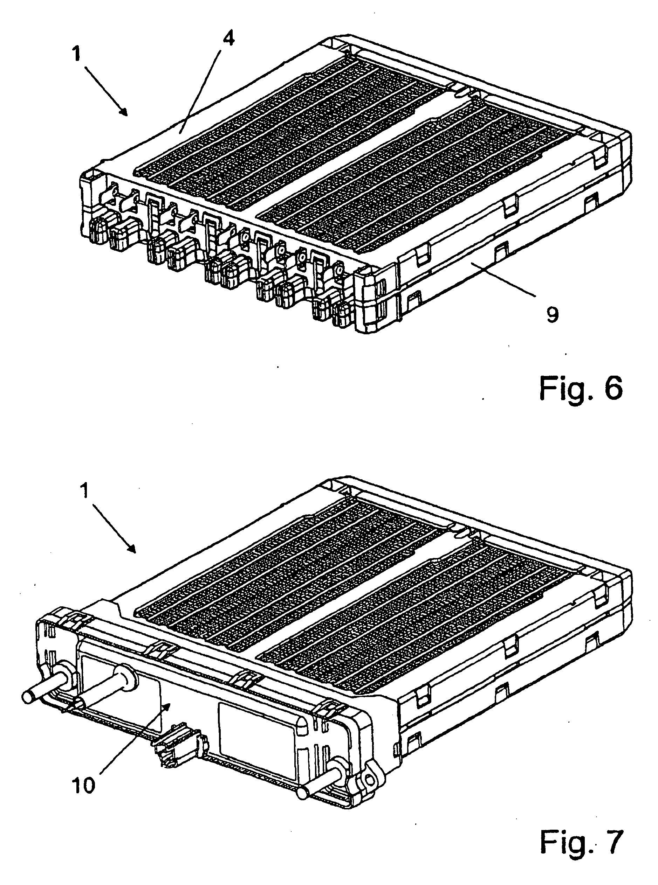

Fig. 5 zeigt die Heizungsanordnung 1 im vormontierten Zustand nach Art einer Explosionsdarstellung. Zwischen den im Rahmen 4 eingefassten Hochspannungsbaugruppen 13 und 14 und den im Rahmen 9 eingefassten Niederspannungsbaugruppen 11 und 12 ist ein Zwischenrahmen 5 angeordnet. Der Zwischenrahmen 5 ist so ausgeführt, dass dieser die beiden Rahmen 4 und 9 im dargestellten Ausführungsbeispiel über eine Clipsverbindung miteinander zu einer kompakten Gesamteinheit wie sie in Fig. 6 dargestellt ist, verbindet. Die Baugruppen 11, 12, 13 und 14 sind dabei in den Rahmen 4 und 9 so angeordnet, dass sie voneinander elektrisch und/oder thermisch isoliert sind. Mittels des Zwischenrahmens 5 wird auch sichergestellt, dass die Niederspannungsbaugruppen 11 und 12 von den Hochspannungsbaugruppen 13 und 14 elektrisch isoliert sind. Der Zwischenrahmen 5 kann alternativ ebenfalls eine Querstrebe in der Symmetrieebene gemäß den Rahmen 4 und 9 aufweisen.

Denkbar ist es auch, dass als Hochspannung eine erhöhte Bordnetzspannung verwendet wird. So wird derzeit beispielsweise diskutiert, dass für die Warmlaufphase eines Motors (welche bei modernen, verbrauchsoptimierten Motoren durchaus einen beträchtlichen Zeitraum umfassen kann) eine sofortige Beheizung über einen elektrisch betriebenen Heizkörper erfolgen kann. Der Heizleistungsbedarf ist dabei teilweise so hoch, dass mit einer üblichen Bordnetzspannung von 12 V die Stromstärken zu hoch würden. Daher wird beispielsweise der Einbau eines zusätzlichen Generators mit einer erhöhten Spannung von beispielsweise 42 V oder 48 V vorgeschlagen. Mit dieser kann die Hochspannungsbaugruppe der vorgeschlagenen Heizkörperanordnung betrieben werden. Dabei kann bei einem solchen Fahrzeug dank der vorgeschlagenen Heizungsanordnung der Zusatzgenerator - beispielsweise zur Kraftstoffersparnis oder Verschleißminimierung - deutlich schneller wieder abgekoppelt werden, da nach wie vor die Niederspannungsbaugruppen zu Zuheizzwecken zur Verfügung stehen.

Wie aus Fig. 6 ersichtlich ist, ragen die Elemente zur Kontaktierung 7 mit ihren äußeren Enden über die Rahmen 9, 4 und den Zwischenrahmen 5 hinaus. An diesen Enden liegen entsprechenden Kontaktschienen an, die in einer seitlichen Abdeckung 10, dargestellt in Fig. 7, der Kunststoff-Rahmen 4 und 9 vorgesehen sind, und die eine gemeinsame elektrische Kontaktierung der einzelnen Heizstränge 8, jeweils der Nieder- und Hochspannungsbaugruppen ermöglichen. Um eine sichere Kontaktierung zu gewährleisten, können an den Elemente zur Kontaktierung Federzungen vorgesehen sein. Die Abdeckung 10 wird seitlich aufgesteckt und mittels weiterer Clipsverbindungen an den beiden Rahmenelementen gehalten. Der vollständig zusammengebaute Zustand ist in Fig. 7 dargestellt.

Die Nieder- und Hochspannungsbaugruppen sind in Strömungsrichtung der zu erwärmenden Luft unmittelbar hintereinander angeordnet und mittels der Rahmen 9 und 4 und des Zwischenrahmens 5 zu einer sehr kompakten Heizanordnung 1 zusammengeführt.

Die einzelnen Heizstränge 8 können hierbei als Standard-Elemente dienen, welche in unterschiedliche Rahmen 4 und 9 eingesetzt werden können, wodurch die Herstellungskosten verringert werden. Dabei sind vorliegend die Heizstränge 8 jeweils der Nieder- und Hochspannungsbaugruppen identisch ausgebildet. Jede Baugruppe besteht aus Unterbaugruppen, so dass die Herstellungskosten weiter gesenkt werden können.

Die in Längsrichtung der PTC-Elemente 2 verlaufende Querstrebe 15 und 16 in den Rahmen 9 und 4 dient zum Einen der Stabilisierung und zum Anderen der räumlichen Trennung der beiden Baugruppen. Durch die Trennung der Baugruppen, die unabhängige Ansteuerungsmöglichkeit und die Querstreben 15 und 16 ist die Heizanordnung vorteilhaft für eine zweizonige Klimaanlage einsetzbar.

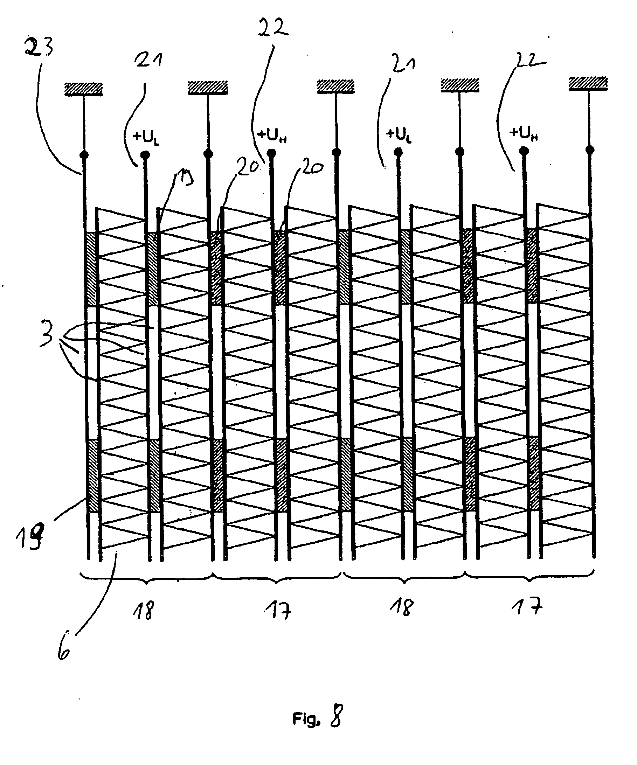

Zur Realisierung einer vierzonigen Klimaanlage, kann in den Rahmen 4 und 9 kann auch eine senkrecht zu den PTC-Elementen angeordnete Querstrebe eingesetzt werden. Dabei sind je zwei Zonen der Klimaanlage auf Grund des Vorhandenseins von jeweils nur zwei Baugruppen für Nieder- und Hochspannungsteil miteinander gekoppelt, d.h. die fahrerseitige Klimatisierung von Front und Fond sowie die beifahrerseitige Klimatisierung von Front und Fond sind miteinander gekoppelt. Dies hat, da der Zuheizer im Wesentlichen nur eine Hilfsfunktion hat, keine wesentliche Beeinträchtigung des Komforts zur Folge. Prinzipiell ist jedoch auch das Vorsehen von je vier Baugruppen möglich, entsprechend den vier Zonen. Auch in diesem Fall können spiegelbildlich ausgebildete oder identische Baugruppen verwendet werden, wobei die elektrische Kontaktierung bevorzugt von beiden Seiten erfolgt.
Eine weitere Möglichkeit zur Ausbildung einer der Erfindung folgenden Heizungsanordnung ist in Fig. 8 schematisch skizziert. Bei der skizzierten Ausbildungsform sind mehrere Niederspannungsbaugruppen 17 und mehrere Hochspannungsbaugruppen 18 jeweils einander abwechselnd in einer Zuheizernetzebene angeordnet. Dadurch kann die fertige Heizungsanordnung insgesamt "einlagig" ausgebildet werden, so dass sich ein fertiger Zuheizer ergeben kann, der der Ansicht in Fig. 2 oder Fig. 4 stark ähnelt. Es ist jedoch auch möglich, zwei oder mehrere der in Fig. 8 angedeuteten Zuheizernetze übereinander zu stapeln, so dass sich beispielsweise die Ansicht gemäß Fig. 7 ergeben kann. Bei einer derartigen Ausführung könnte beispielsweise eine Baugruppe (oder mehrere) gemäß Fig. 8 beim der in Fig. 7 dargestellten Heizungsanordnung einen oder mehrere der Heizstränge 8 ersetzen.

Bei der in Fig. 8 Anordnung wird über Niederspannungsbleche 21 eine Niederspannung +U_{L} (gegenüber Masse) an die entsprechend ausgebildeten Niederspannungs-PTC-Elemente 19 angelegt. Der Stromfluss erfolgt dabei von der Niederspannungsquelle ausgehend über die Niederspannungsbleche 21, durch die Niederspannungs-PTC-Elemente 19, die Wellrippen 6 und die Massebleche 23 zurück zur entsprechenden Spannungsquelle. Bei einem Teil der Niederspannungs-PTC-Elemente 19 erfolgt der Stromfluss jedoch zunächst durch die Wellrippen 6 und erst anschließend durch die Niederspannungs-PTC-Elemente 19 hindurch, wie sich der Skizze entnehmen lässt. Für die über die Hochspannungs-Kontaktelemente 22 den Hochspannungs-PTC-Elementen 20 zugeführte Hochspannung +U_{H} (gegenüber Masse) gilt das sinngemäß Entsprechende. Zu beachten ist, dass im in der Fig. 8 dargestellten Ausführungsbeispiel bei den innenliegenden Baugruppen 17, 18 jeweils eine Hochspannungsbaugruppe 18 und eine Niederspannungsbaugruppe 17 ein gemeinsames Masseblech 23 aufweisen.

### Bezugszeichenliste

- 1: Heizungsanordnung
- 2: PTC-Element
- 3: Kontaktblech
- 4: Rahmen
- 5: Zwischenrahmen
- 6: Wellrippe
- 7: Element zur Kontaktierung
- 8: Heizstrang
- 9: Rahmen
- 10: Abdeckung
- 11, 12, 18: Niederspannungsbaugruppe
- 13, 14, 17: Hochspannungsbaugruppe
- 15, 16: Querstrebe
- 19: Niederspannungs-PTC-Element
- 20: Hochspannungs-PTC-Element
- 21: Niederspannungs-Blech
- 22: Hochspannungs-Blech
- 23: Masseblech

## Patentansprüche

1. Heizungsanordnung (1), insbesondere für ein Kraftfahrzeug, die zumindest zwei Baugruppen (11, 12, 13, 14, 17, 18) umfasst, wobei jede Baugruppe zumindest einen Heizstrang (8) umfasst, mit zumindest einem elektrischen Heizelement, insbesondere PTC-Element (2), Kontaktelementen und zumindest einem Element zur Wärmeübertragung, wobei zumindest eine erste Baugruppe (11, 12, 18) von einer Niederspannungsquelle und zumindest eine zweite Baugruppe (13, 14, 17) von einer Hochspannungsquelle versorgt wird, **dadurch gekennzeichnet, dass** die zumindest zwei Baugruppen, ein gemeinsames stromableitendes Kontaktelement (23) aufweisen.

2. Heizungsanordnung nach Anspruch 1, **dadurch gekennzeichnet, dass** ein Heizstrang (8) eine Mehrzahl von Heizelementen (2) aufweist.

3. Hetzungsanordnung nach Anspruch 1 oder 2 **dadurch gekennzeichnet, dass**, ein Heizelement (2) zwischen zwei Kontaktelementen (3) angeordnet ist.

4. Heizungsanordnung nach einem der vorhergehenden Ansprüche, **dadurch gekennzeichnet, dass**, die Kontaktelemente in Form von Kontaktblechen (3) ausgebildet sind.

5. Heizungsanordnung nach einem der vorhergehenden Ansprüche, **dadurch gekennzeichnet, dass**, die Elemente zur Wärmeübectragung als Wellrippen (6) oder als Bleche, die im Wesentlichen senkrecht zur Längsrichtung der Heizelemente (2) angeordnet sind, ausgebildet sind.

6. Heizungsanordnung nach einem der vorhergehenden Ansprüche, **dadurch gekennzeichnet, dass** die Niederspannungsquelle eine Kraftfahrzeugbordnetzspannung ist.

7. Heizungsanordnung nach einem der vorhergehenden Ansprüche, **dadurch gekennzeichnet, dass** die Hochspannungsquelle eine Netzspannung ist.

8. Heizungsanordnung nach einem der vorhergehenden Ansprüche, **dadurch gekennzeichnet, dass** die Niederspannungsquelle eine Spannung von 12 ± 2 V bis 14 ± 2, 24± 2 V, 42 ± 2 V oder 48 ± 2 V aufweist.

9. Heizungsanordnung nach einem der vorhergehenden Ansprüche, **dadurch gekennzeichnet, dass** die Hochspannungsquelle eine Spannung von 24 ± 2 V, 42 ± 2 V, 48 ± 2 V, 110 ± 10 V oder 230 ± 20 V aufweist.

10. Heizungsanordnung nach einem der vorhergehenden Ansprüche **dadurch gekennzeichnet, dass** zumindest zwei Baugruppen (11, 12, 13, 14, 17, 18) zu einer Baueinheit zusammengefasst oder miteinander verbunden sind.

11. Heizungsanordnung nach einem der vorhergehenden Ansprüche, **dadurch gekennzeichnet, dass** zumindest zwei Baugruppen (11, 12, 13, 14, 17, 18) von einem Halteelement oder Rahmen (4, 9) gehalten werden.

12. Heizungsanordnung nach einem der vorhergehenden Ansprüche, **dadurch gekennzeichnet, dass** die Niederspannungsbaugruppen (11, 12, 18) und Hochspannungsbaugruppen (13, 14, 17) von voneinander getrennten Halteelementen oder Rahmen (4, 9) gehalten werden und/oder in diese eingelegt sind.

13. Heizungsanordnung nach einem der vorhergehenden Ansprüche, **dadurch gekennzeichnet, dass** die Halteelemente oder Rahmen (4, 9) miteinander verbunden sind.

14. Heizungsanordnung nach einem der vorhergehenden Ansprüche, **dadurch gekennzeichnet, dass** die Halteelemente oder Rahmen (4, 9) über ein Verbindungselement, insbesondere einen Zwischenrahmen (5) miteinander verbunden sind.

15. Heizungsanordnung nach einem der vorhergehenden Ansprüche, **dadurch gekennzeichnet, dass** Niederspannungsbaugruppen (11, 12, 18) und Hochspannungsbaugruppen (13, 14, 17) elektrisch voneinander isoliert sind durch die Fixierung mittels der Halteelemente oder Rahmen (4, 9) und/oder des Verbindungselements oder des Zwischenrahmens (5).

16. Heizungsanordnung nach einem der vorhergehenden Ansprüche, **dadurch gekennzeichnet, dass** die Halteelemente oder Rahmen (4, 9) und/oder das Verbindungselement oder der Zwischenrahmen 5 aus Kunststoff bestehen.

17. Heizungsanordnung nach einem der vorhergehenden Ansprüche, **dadurch gekennzeichnet, dass** zumindest zwei Niederspannungsbaugruppen (11, 12, 18) spiegelbildlich angeordnet und/oder im Wesentlichen gleich aufgebaut sind.

18. Heizungsanordnung nach einem der vorhergehenden Ansprüche, **dadurch gekennzeichnet, dass** zumindest zwei Hochspannungsbaugruppen (13, 14, 17) spiegelbildlich angeordnet und/oder im Wesentlichen gleich aufgebaut sind.

19. Heizungsanordnung nach einem der vorhergehenden Ansprüche, **dadurch gekennzeichnet, dass** der Rahmen (4, 9) eine als Trennung dienende Querstrebe (15, 16) aufweist, welche zwei benachbarte Baugruppen voneinander räumlich trennt.

20. Heizungsanordnung nach einem der vorhergehenden Ansprüche, **dadurch gekennzeichnet, dass** das der Zwischenrahmen (5) eine als Trennung dienende Querstrebe aufweist, welche im Wesentlichen fluchtend zu einer Querstrebe (15, 16) eines Rahmens (4, 9) angeordnet ist.

21. Heizungsanordnung nach einem der vorhergehenden Ansprüche, **dadurch gekennzeichnet, dass** die Querstrebe in einer Symmetrieebene des Rahmens (4, 9) und/oder des Zwischenrahmens (5) angeordnet ist.

22. Heizungsanordnung nach einem der vorhergehenden Ansprüche, **dadurch gekennzeichnet, dass** eine zweite Querstrebe senkrecht zu einer ersten, parallel zu den Baugruppen (11, 12, 13, 14, 17, 18) verlaufenden Querstrebe (15, 16) vorgesehen ist.

23. Heizungsanordnung nach einem der vorhergehenden Ansprüche, **dadurch gekennzeichnet, dass** ein die Baugruppen (11, 12, 13, 14, 17, 18) umgebender Rahmen (4, 9) aus mindestens zwei Rahmenelementen besteht.

24. Heizungsanordnung nach einem der vorhergehenden Ansprüche, **dadurch gekennzeichnet, dass** die Rahmenelemente mittels Clipsverbindungen miteinander verbunden sind.

25. Heizungsanordnung nach einem der vorhergehenden Anspruche, **dadurch gekennzeichnet, dass** die Baugruppe (11, 12, 13, 14, 17, 18) mindestens zwei Weilrippen (6) aufweist, welche auf der Außenseite zweier Kontaktbleche (3) zwischen denen ein PTC-Element (2) vorgesehen ist, angeordnet ist.

26. Heizungsanordnung nach einem der vorhergehenden Ansprüche, **dadurch gekennzeichnet, dass** die Heizungsanordnung (1) mindestens je zwei unabhängige Baugruppen (11, 12, 13, 14, 17, 18) oder Heizstränge (8), insbesondere für den Niederspannungsteil und den Hochspannungsteil der Heizungsanordnung (1) umfasst, wobei ein oder mehrere Baugruppen (11, 12, 13, 14, 17, 18) oder Heizstränge (8) einer oder zwei Klimazonen einer mehrzonigen Klimaanlage zugeordnet sind.

27. Heizungsanordnung nach einem der vorhergehenden Ansprüche, **dadurch gekennzeichnet, dass** zumindest eine als Niederspannungsbaugruppe (18) ausgebildete Baugruppe, und zumindest eine als Hochspannungsbaugruppe (17) ausgebildete Baugruppe in einer Ebene angeordnet sind.

28. Heizungsanordnung nach einem der vorhergehenden Ansprüche, insbesondere nach Anspruch 27, **dadurch gekennzeichnet, dass** zumindest eine als Niederspannungsbaugruppe (18) ausgebildete Baugruppe, und/oder zumindest eine als Hochspannungsbaugruppe (17) ausgebildete Baugruppe jeweils genau eine Lage und/oder genau zwei Lagen von Heizelementen aufweist.

29. Heizungsanordnung nach einem der vorhergehenden Ansprüche, insbesondere nach Anspruch 27 oder 28, **dadurch gekennzeichnet, dass** zumindest eine als Niederspannungsbaugruppe (18) ausgebildete Baugruppe, und/oder zumindest eine als Hochspannungsbaugruppe (17) ausgebildete Baugruppe jeweils genau ein stromzuführendes Kontaktelement (21, 22) aufweist.

30. Heizungsanordnung nach einem der vorhergehenden Ansprüche, insbesondere nach einem der Ansprüche 27 bis 29, **dadurch gekennzeichnet, dass** zumindest in Teilbereichen der Heizungsanordnung als Niederspannungsbaugruppen (18) ausgebildete Baugruppen, und als Hochspannungsbaugruppen (17) ausgebildete Baugruppen jeweils aufeinander abfolgen.

31. Heizungsanordnung nach einem der vorhergehenden Ansprüche, **dadurch gekennzeichnet, dass** zumindest eine als Niederspannungsbaugruppe (11, 12, 18) ausgebildete Baugruppe, und/oder zumindest eine als Hochspannungsbaugruppe (13, 14, 17) ausgebildete Baugruppe in unterschiedlichen Ebenen angeordnet sind.

## Claims

1. A heating system (1), in particular for a motor vehicle, comprising at least two sub-assemblies (11, 12, 13, 14, 17, 18), each sub-assembly comprising at least one heating section (8), having at least one electric heating element, in particular a PTC element (2), contact elements and at least one element for heat transfer, at least one first sub-assembly (11, 12, 18) being supplied by a low-voltage source and at least one second sub-assembly (13, 14, 17) being supplied by a high-voltage source, **characterized in that** the at least two sub-assemblies comprise a common current-conducting contact element (23).

2. The heating system according to claim 1, **characterized in that** a heating section (8) comprises a plurality of heating elements (2).

3. The heating system according to claim 1 or 2, **characterized in that** a heating element (2) is disposed between two contact elements (3).

4. A heating system according to any one of the preceding claims, **characterized in that** the contact elements are designed as contact plates (3).

5. A heating system according to any one of the preceding claims, **characterized in that** the elements for heat transfer are designed as corrugated ribs (6) or as metal sheets that are disposed substantially perpendicular relative to the longitudinal direction of the heating elements (2).

6. A heating system according to any one of the preceding claims, **characterized in that** the low-voltage source is an onboard motor vehicle line voltage.

7. A heating system according to any one of the preceding claims, **characterized in that** the high-voltage source is a line voltage.

8. A heating system according to any one of the preceding claims, **characterized in that** the low-voltage source has a voltage of 12 ± 2 V to 14 ± 2, 24 ± 2 V, 42 ± 2 V or 48 ± 2 V.

9. A heating system according to any one of the preceding claims, **characterized in that** the high-voltage source has a voltage of 24 ± 2 V, 42 ± 2 V, 48 ± 2 V, 110 ± 10 V or 230 ± 20 V.

10. A heating system according to any one of the preceding claims, **characterized in that** at least two sub-assemblies (11, 12, 13, 14, 17, 18) are combined to form a unit or are connected to each other.

11. A heating system according to any one of the preceding claims, **characterized in that** at least two sub-assemblies (11, 12, 13, 14, 17, 18) are held by a retaining element or a frame (4, 9).

12. A heating system according to any one of the preceding claims, **characterized in that** the low-voltage sub-assemblies (11, 12, 18) and high-voltage sub-assemblies (13, 14, 17) are held by mutually separated retaining elements or frames (4, 9) and/or are inserted therein.

13. A heating system according to any one of the preceding claims, **characterized in that** the retaining elements or frames (4, 9) are connected to each other.

14. A heating system according to any one of the preceding claims, **characterized in that** the retaining elements or frames (4, 9) are connected to each other by a connecting element, in particular an intermediate frame (5).

15. A heating system according to any one of the preceding claims, **characterized in that** the low-voltage sub-assemblies (11, 12, 18) and high-voltage sub-assemblies (13, 14, 17) are electrically insulated from each other by the fixation by way of the retaining elements or frames (4, 9) and/or the connecting element or the intermediate frame (5).

16. A heating system according to any one of the preceding claims, **characterized in that** the retaining elements or frames (4, 9) and/or the connecting element or the intermediate frame (5) are made of plastic material.

17. A heating system according to any one of the preceding claims, **characterized in that** at least two low-voltage sub-assemblies (11, 12, 18) are disposed laterally reversed and/or are constructed substantially identically.

18. A heating system according to any one of the preceding claims, **characterized in that** at least two high-voltage sub-assemblies (13, 14, 17) are disposed laterally reversed and/or are constructed substantially identically.

19. A heating system according to any one of the preceding claims, **characterized in that** the frame (4, 9) comprises a cross member (15, 16) that serves as a partition and spatially separates two adjoining sub-assemblies.

20. A heating system according to any one of the preceding claims, **characterized in that** the intermediate frame (5) comprises a cross member serving as a partition, which is disposed substantially aligned with a cross member (15, 16) of a frame (4, 9).

21. A heating system according to any one of the preceding claims, **characterized in that** the cross member is disposed in a plane of symmetry of the frame (4, 9) and/or of the intermediate frame (5).

22. A heating system according to any one of the preceding claims, **characterized in that** a second cross member is provided perpendicular to a first cross member (15, 16) that extends parallel to the sub-assemblies (11, 12, 13, 14, 17, 18).

23. A heating system according to any one of the preceding claims, **characterized in that** a frame (4, 9) surrounding the sub-assemblies (11, 12, 13, 14, 17, 18) is composed of at least two frame elements.

24. A heating system according to any one of the preceding claims, **characterized in that** the frame elements are connected to each other by way of clip connections.

25. A heating system according to any one of the preceding claims, **characterized in that** the sub-assembly (11, 12, 13, 14, 17, 18) comprises at least two corrugated ribs (6), which are disposed on the outer sides of two contact plates (3) between which a PTC element (2) is provided.

26. A heating system according to any one of the preceding claims, **characterized in that** the heating system (1) comprises at least two independent sub-assemblies (11, 12, 13, 14, 17, 18) or heating sections (8), in particular for the low-voltage part and the high-voltage part of the heating system (1), wherein one or more sub-assemblies (11, 12, 13, 14, 17, 18) or heating sections (8) are associated with one or two climate zones of a multi-zone air conditioning system.

27. A heating system according to any one of the preceding claims, **characterized in that** at least one sub-assembly designed as a low-voltage sub-assembly (18) and at least one sub-assembly designed as a high-voltage sub-assembly (17) are disposed in one plane.

28. A heating system according to any one of the preceding claims, in particular according to claim 27, **characterized in that** at least one sub-assembly designed as a low-voltage sub-assembly (18) and/or at least one sub-assembly designed as a high-voltage sub-assembly (17) comprise in each case exactly one layer and/or exactly two layers of heating elements.

29. A heating system according to any one of the preceding claims, in particular according to claim 27 or 28, **characterized in that** at least one sub-assembly designed as a low-voltage sub-assembly (18) and/or at least one sub-assembly designed as a high-voltage sub-assembly (17) comprise in each case exactly one current-feeding contact element (21, 22).

30. A heating system according to any one of the preceding claims, in particular according to any one of claims 27 to 29, **characterized in that** sub-assemblies designed as low-voltage sub-assemblies (18) and sub-assemblies designed as high-voltage sub-assemblies (17) follow each other, at least in subregions of the heating system.

31. A heating system according to any one of the preceding claims, **characterized in that** at least one sub-assembly designed as a low-voltage sub-assembly (11, 12, 18) and/or at least one sub-assembly designed as a high-voltage sub-assembly (13, 14, 17) are disposed in different planes.

## Revendications

1. Agencement de chauffage (1), en particulier pour un véhicule automobile, qui comprend au moins deux ensembles (11, 12, 13, 14, 17, 18), où chaque ensemble comprend au moins un circuit de chauffage (8) et comporte au moins un élément chauffant électrique, en particulier un élément - PTC - à coefficient de température positif (2), des éléments de contact et au moins un élément servant au transfert de chaleur, où au moins un premier ensemble (11, 12, 18) est alimenté par une source de basse tension, au moins un deuxième ensemble (13, 14, 17) étant alimenté par une source de haute tension, **caractérisé en ce que** les ensembles au moins au nombre de deux présentent un élément de contact commun (23) dérivant le courant.

2. Agencement de chauffage selon la revendication 1, **caractérisé en ce qu'**un circuit de chauffage (8) présente une pluralité d'éléments chauffants (2).

3. Agencement de chauffage selon la revendication 1 ou 2, **caractérisé en ce qu'**un élément chauffant (2) est disposé entre deux éléments de contact (3).

4. Agencement de chauffage selon l'une quelconque des revendications précédentes, **caractérisé en ce que** les éléments de contact sont configurés sous la forme de tôles de contact (3).

5. Agencement de chauffage selon l'une quelconque des revendications précédentes, **caractérisé en ce que** les éléments servant au transfert de chaleur sont configurés comme des ailettes ondulées (6) ou comme des tôles qui sont disposées pratiquement de façon perpendiculaire à la direction longitudinale des éléments chauffants (2).

6. Agencement de chauffage selon l'une quelconque des revendications précédentes, **caractérisé en ce que** la source de basse tension est une tension du réseau de bord d'un véhicule automobile.

7. Agencement de chauffage selon l'une quelconque des revendications précédentes, **caractérisé en ce que** la source de haute tension est une tension de réseau.

8. Agencement de chauffage selon l'une quelconque des revendications précédentes, **caractérisé en ce que** la source de basse tension présente une tension allant de 12 ± 2 V à 14 ± 2 V, de 24 ± 2 V, de 42 ± 2 V ou de 48 ± 2 V.

9. Agencement de chauffage selon l'une quelconque des revendications précédentes, **caractérisé en ce que** la source de haute tension présente une tension de 24 ± 2 V, de 42 ± 2 V, de 48 ± 2 V, de 110 ± 10 V ou de 230 ± 20 V.

10. Agencement de chauffage selon l'une quelconque des revendications précédentes, **caractérisé en ce qu'**au moins deux ensembles (11, 12, 13, 14, 17, 18) sont regroupés pour former un ensemble unitaire ou assemblés l'un à l'autre.

11. Agencement de chauffage selon l'une quelconque des revendications précédentes, **caractérisé en ce qu'**au moins deux ensembles (11, 12, 13, 14, 17, 18) sont tenus par un élément de retenue ou cadre (4, 9).

12. Agencement de chauffage selon l'une quelconque des revendications précédentes, **caractérisé en ce que** les ensembles à basse tension (11, 12, 18) et les ensembles à haute tension (13, 14, 17) sont tenus par des éléments de retenue ou cadres (4, 9) séparés l'un de l'autre et/ou introduits dans ces éléments de retenue ou cadres.

13. Agencement de chauffage selon l'une quelconque des revendications précédentes, **caractérisé en ce que** les éléments de retenue ou cadres (4, 9) sont assemblés l'un à l'autre.

14. Agencement de chauffage selon l'une quelconque des revendications précédentes, **caractérisé en ce que** les éléments de retenue ou cadres (4, 9) sont assemblés l'un à l'autre par un élément d'assemblage, en particulier par un cadre intermédiaire (5).

15. Agencement de chauffage selon l'une quelconque des revendications précédentes, **caractérisé en ce que** les ensembles à basse tension (11, 12, 18) et les ensembles à haute tension (13, 14, 17) sont isolés électriquement les uns des autres, par la fixation au moyen des éléments de retenue ou cadres (4, 9) et/ou au moyen de l'élément d'assemblage ou du cadre intermédiaire (5).

16. Agencement de chauffage selon l'une quelconque des revendications précédentes, **caractérisé en ce que** les éléments de retenue ou cadres (4, 9) et/ou l'élément d'assemblage ou le cadre intermédiaire (5) sont en matière plastique.

17. Agencement de chauffage selon l'une quelconque des revendications précédentes, **caractérisé en ce qu'**au moins deux ensembles à basse tension (11, 12, 18) sont disposés en étant à symétrie spéculaire et/ou constitués de façon pratiquement identique.

18. Agencement de chauffage selon l'une quelconque des revendications précédentes, **caractérisé en ce qu'**au moins deux ensembles à haute tension (13, 14, 17) sont disposés en étant à symétrie spéculaire et/ou constitués de façon pratiquement identique.

19. Agencement de chauffage selon l'une quelconque des revendications précédentes, **caractérisé en ce que** le cadre (4, 9) présente une entretoise transversale (15, 16) servant de séparation, laquelle entretoise transversale sépare l'un de l'autre, dans l'espace, deux ensembles adjacents.

20. Agencement de chauffage selon l'une quelconque des revendications précédentes, **caractérisé en ce que** le cadre intermédiaire (5) présente une entretoise transversale servant de séparation, laquelle entretoise transversale est disposée en étant pratiquement alignée par rapport à une entretoise transversale (15, 16) d'un cadre (4, 9).

21. Agencement de chauffage selon l'une quelconque des revendications précédentes, **caractérisé en ce que** l'entretoise transversale est disposée dans un plan de symétrie du cadre (4, 9) et/ou du cadre intermédiaire (5).

22. Agencement de chauffage selon l'une quelconque des revendications précédentes, **caractérisé en ce qu'**il est prévu une deuxième entretoise transversale perpendiculaire à une première entretoise transversale (15, 16) s'étendant parallèlement aux ensembles (11, 12, 13, 14, 17, 18).

23. Agencement de chauffage selon l'une quelconque des revendications précédentes, **caractérisé en ce qu'**un cadre (4, 9) entourant les ensembles (11, 12, 13, 14, 17, 18) se compose d'au moins deux éléments de cadre.

24. Agencement de chauffage selon l'une quelconque des revendications précédentes, **caractérisé en ce que** les éléments de cadre sont assemblés les uns aux autres au moyen d'assemblages clipsés.

25. Agencement de chauffage selon l'une quelconque des revendications précédentes, **caractérisé en ce que** l'ensemble (11, 12, 13, 14, 17, 18) présente au moins deux ailettes ondulées (6) qui sont disposées sur le côté extérieur de deux tôles de contact (3) entre lesquelles est prévu un élément PTC (2).

26. Agencement de chauffage selon l'une quelconque des revendications précédentes, **caractérisé en ce que** l'agencement de chauffage (1) comprend au moins à chaque fois deux ensembles indépendants (11, 12, 13, 14, 17, 18) ou des circuits de chauffage (8), en particulier pour la partie à basse tension et pour la partie à haute tension de l'agencement de chauffage (1), où un ou plusieurs ensembles (11, 12, 13, 14, 17, 18) ou des circuits de chauffage (8) sont associés à une zone ou à deux zones de climatisation d'un système de climatisation à zones multiples.

27. Agencement de chauffage selon l'une quelconque des revendications précédentes, **caractérisé en ce qu'**au moins un ensemble configuré comme un ensemble à basse tension (18) et au moins un ensemble configuré comme un ensemble à haute tension (17) sont disposés dans un plan.

28. Agencement de chauffage selon l'une quelconque des revendications précédentes, en particulier selon la revendication 27, **caractérisé en ce qu'**au moins un ensemble configuré comme un ensemble à basse tension (18) et/ou au moins un ensemble configuré comme un ensemble à haute tension (17) présente à chaque fois précisément une position et/ou précisément deux positions d'éléments chauffants.

29. Agencement de chauffage selon l'une quelconque des revendications précédentes, en particulier selon la revendication 27 ou 28, **caractérisé en ce qu'**au moins un ensemble configuré comme un ensemble à basse tension (18) et/ou au moins un ensemble configuré comme un ensemble à haute tension (17) présente à chaque fois précisément un élément de contact (21, 22) fournissant du courant.

30. Agencement de chauffage selon l'une quelconque des revendications précédentes, en particulier selon l'une quelconque des revendications 27 à 29, **caractérisé en ce que** des ensembles configurés comme des ensembles à basse tension (18) et des ensembles configurés comme des ensembles à haute tension (17) se suivent à chaque fois, au moins dans des zones partielles de l'agencement de chauffage.

31. Agencement de chauffage selon l'une quelconque des revendications précédentes, **caractérisé en ce qu'**au moins un ensemble configuré comme un ensemble à basse tension (11, 12, 18) et/ou au moins un ensemble configuré comme un ensemble à haute tension (13, 14, 17) sont disposés dans des plans différents.
